# EUROPÄISCHE PATENTSCHRIFT

(11) **EP 3 429 431 B1**
(45) Veröffentlichungstag und Bekanntmachung des Hinweises auf die Patenterteilung: **25.12.2019**
(21) Anmeldenummer: 17710543.4
(22) Anmeldetag: 15.03.2017
(51) Int. Cl.: A47C 19/04

(54) **UMWANDELBARES MULTIFUNKTIONSMÖBEL**
CONVERTIBLE MULTIFUNCTIONAL FURNITURE
MEUBLE MULTIFONCTION CONVERTIBLE

(30) Priorität: 16.03.2016 IT UA20161720
(43) Veröffentlichungstag der Anmeldung: 23.01.2019
(73) Patentinhaber: Salin, Roberto, 39100 Bolzano (IT)
(72) Erfinder: Salin, Roberto, 39100 Bolzano (IT)
(74) Vertreter: Ausserer, Anton
(86) Internationale Anmeldenummer: PCT/EP2017/056061
(87) Internationale Veröffentlichungsnummer: WO 2017/157981

(56) Entgegenhaltungen:
- WO-A1-2014/147003
- DE-C- 846 157
- DE-C1- 19 842 908

## Beschreibung

Die vorliegende Erfindung bezieht sich auf ein umwandelbares Multifunktionsmöbel gemäß dem Oberbegriff des Anspruchs 1.

In den Anmeldungen PCT/EP2014/A000036, ITBZ2014/A000036 und PCT/EP2015/071017 sind Systeme beschrieben, um Möbel von einer Gebrauchsstellung in mindestens eine andere Gebrauchsstellung zu bringen. Diese Gebrauchsstellungen sind zum Beispiel jene der Entspannung, des Sitzens, für Behandlungen wie Massagen, des Bettes, des Sessels, des Bettmachens usw. Dazu sind die Möbel mit Gebrauchseinheiten versehen, die zwei zueinander gegenüberliegende Stirnseiten mit denselben oder verschiedenen Funktionen aufweisen können um die erwähnten Stellungen zu erhalten.

Die Aufgabe der vorliegenden Erfindung besteht im Vorschlag, das kinematische System zur Bewegung der Gebrauchseinheit in seinen gewünschten Stellungen zu verbessern, mit der Möglichkeit die Kosten weiterhin abzusenken und dessen Verwendung seitens des Benutzers zu erleichtern.

Diese Aufgabe wird durch ein umwandelbares Multifunktionsmöbel mit den Merkmalen des Anspruchs 1 gelöst.

Es wird somit ein umwandelbares Multifunktionsmöbel mit einem Scherenmechanismus vorgeschlagen, der zwischen der Hebevorrichtung und dem entsprechenden Zapfen der Drehachse angeordnet ist. Mindestens ein Scherenschenkel ist an einem Ende mit einem Antrieb der Hebevorrichtung und am anderen Ende mit dem Träger derselben verbunden. Der andere Scherenschenkel ist für den Antrieb mit einem Zahnelement verbunden, das in einem Zahnrad kämmend verbunden ist, das drehbar mit einem komplementären Element des Drehzapfens verbunden ist.

In einer ersten Ausführungsform ist das Zahnelement eine verschiebbare Zahnstange, die einen zahnlosen Abschnitt aufweist, der innerhalb einer am Träger festliegenden Führung angeordnet ist, die die beiden oberen Ende der Scherenschenkel zur Steuerung eines Getriebes verbindet. Im Augenblick wo der zahnlose Teil der Zahnstange beendet ist, kämmt diese mit ihren Zähnen mit dem Zahnrad, das bei der Verschiebung sich um 180 Grad dreht.

In einer Variante besteht das Getriebe aus einer Scheibenaussparung, die am Drehzapfen der Gebrauchseinheit ausgebildet ist. Diese Scheibenaussparung kann mit dem Keil einer Scheibe gekoppelt werden, die vom Träger mit der zur Achse des Zahnrades mit Freilauf festliegenden Achse mit der Zahnstange kämmend drehbar getragen wird.

In einer weiteren Variante besteht das Getriebe aus einem Zahnrad, das am Zapfen festliegt, und das mit einem Zahnrad koppelbar ist, das vom Träger mit zur Achse des Zahnrades mit Freilauf festliegender Achse getragen wird, das mit der Zahnstange kämmt.

In einer weiteren Variante besteht das Getriebe aus Stangen, die in einem Gelenk zusammenlaufen. Ein Ende der einen Stange weist einen kreisförmigen an ihr festliegenden Zahnsektor auf, der mit einem Zahnrad, ausgehend von einem Winkel zwischen den beiden Stangen kämmt, der erreicht, wird um die Gebrauchseinheit um einen bestimmten Winkel, beispielsweise um 180 Grad, bevorzugter Weise unter Zwischenschaltung von Übersetzungszahnrädern zu drehen. Eines der Zahnräder ist mit einem Freilauf versehen.

In einer weiteren Ausführungsform ist die Gebrauchseinheit ein Sessel- Stuhl oder ein Bett, die mittels des erfindungsgemäßen Mechanismus in eine Sessel- Bett unwandelbar ist und unter Wendung von 180 Grad der Gebrauchseinheit kann eine Massageebene oder unter Biegung der Gebrauchseinheit kann ein Stuhl erhalten werden, dessen Rückenlehne und Sitzebene durch das Massagebrett gebildet werden.

Die Hebevorrichtung kann zum Beispiel aus mindestens einem Storchschnabel (für Sessel, Diwane, Betten, Kindersitze usw.) bestehen, an dem ein Träger positioniert ist, der eine verschiebbare Zahnstange trägt, unter Eingriff am Zapfen eines Storchschnabelelementes. Wird der Storchschnabel auf bekannte Art und Weise angehoben, so wird die Zahnstange längs des Trägers verschoben, wobei sie ein Zahnrad erreicht, bis der Drehzapfen erreicht wird, der zum Beispiel aus der Matratze oder dem Massagebrett der Gebrauchseinheit heraustritt. Wird die für die Drehung der Matratze oder der Matratze mit Massagebrett geeignete Höhe erreicht, dreht das Zahnrad mit Freilauf durch den Vorschub der Zahnstange die Matratze mit Massagebrett um 180 Grad.

Ist die Drehung abgeschlossen, so wird der Storchschnabel in die Anfangsstellung abgesenkt und der Drehzapfen der Matratze ist unter Loslösung vom Zahnrad für die nächste Drehung bereit. Im Träger sind außer dem Zahnrad mit Keil, Freilauf, ein einladender Trichter zur Erleichterung der Überschneidung des Drehzapfens mit der Scheibenaussparung der Matratze und mindestens zwei verschwenkbare Klappen oder Zylinder- Rollen parallel zum Träger anwesend, die durch ein Elektromagnet oder auf bekannte Art und Weise gesteuert werden und sobald sie betätigt sind, sie senkrecht zum Träger ausgerichtet werden, wobei unter Anheben des Storchschnabels die Klappen den Rahmen- das Brettdas Gitter- das Lager, die Matratze, den Sessel, das Bett usw. im unteren Teil derselben überschneidet, wobei diese vertikal angehoben werden, wenn mindestens vier Klappen zu einander gegenüber liegenden auf zwei Steuerschnäbeln betätigt werden, oder wobei die Neigung in der einen oder anderen Richtung ermöglicht wird, wenn mindestens zwei gegeneinander liegende Klappen betätigt werden.

Dieses System ist auch für Sessel, Diwane, Stühle, Schreibtische, und Möbel im allgemeinen geeignet. In diesem Fall können die Stützfüße fehlen.

Die Drehachse kann sich auch auf der horizontalen Querachse - an den Seiten des Sessels- Bettes, Gymnastikebenen, Massagebrett, Patiententransportbett, Stuhl befinden; es können sich auch in der Zeichnung nicht dargestellte Armstützen, Schiebegriffe sowohl im Bett als auch im Sessel- Stuhl befinden. Die Verstell-/Anhebe-/Neigungs-/Stützmechanismen des Bettes- Sessels selbst können sowohl als teleskopische Zylinder, Führungen oder scherenartig angebracht sein, jedenfalls auch auf den Querseiten positioniert. Insbesondere beim Sessel/Bett sind mindestens zwei Hebemechanismen vorhanden.

Der Träger mit den Klappen oder Zylindern, auch Auffangmittel des Rahmens - Gitters - Bretts- Lagers genannt, außer das Anheben und die Neigung zu erlauben, kann das Bett selbst halten, ohne die Auflagefüße zu benötigen. Dieses System ist auch für Sessel, Diwane, Stühle, Schreibtische und im Allgemeinen alle Möbel geeignet. Die Auflagefüße sind mit dem Unterrahmen am Fußboden einstückig ausgeführt, der die Scherenmechanismen und mindestens einen Antrieb, bzw. teleskopische Führungen, teleskopische Zylinder und Stangen enthält. Die Schere (Storchschnabel) kann auch dazu dienen, um Diwane, Sessel, Möbel, Tische, erhöhte Kinderstühle immer mit mindestens zwei Hebemechanismen in der Längs- oder Querachse des umwandelbaren Multifunktionsmöbels oder von Auflageebenen zu heben, abzusenken oder zu neigen.

Weitere Merkmale und Vorteile gehen aus den Patentansprüchen und der folgenden Beschreibung von einigen in den beigefügten Zeichnungen dargestellten Ausführungsformen hervor. Es zeigen,

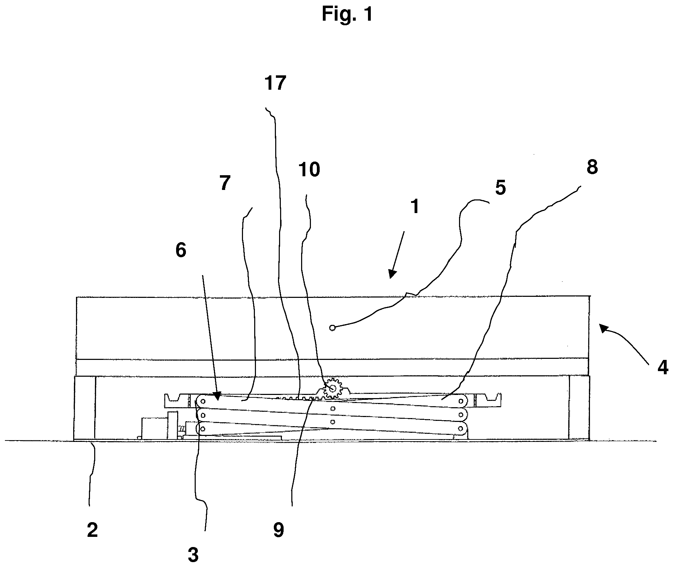

Figur 1 eine schematische Stirnansicht eines umwandelbaren Multifunktionsmöbels in einer Ruhestellung,

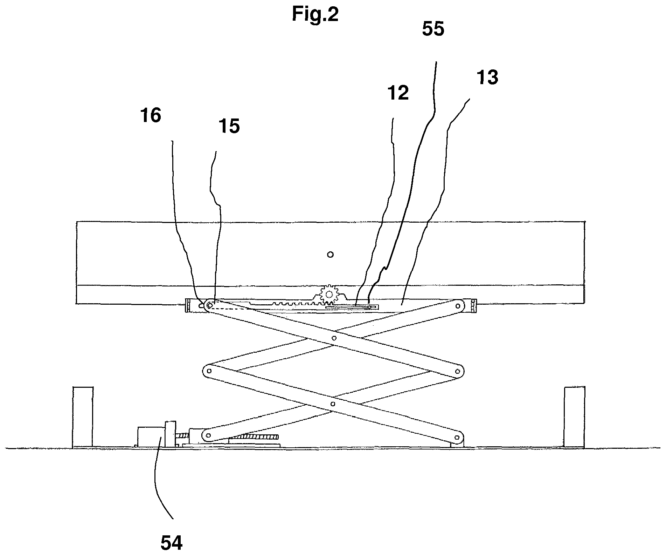

Figur 2 eine schematische Stirnansicht eines umwandelbaren Multifunktionsmöbels in einer angehobenen Stellung,

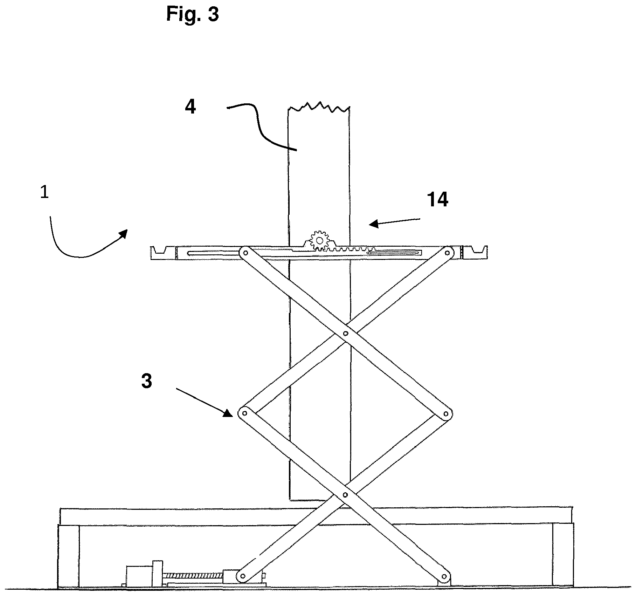

Figur 3 eine schematische Stirnansicht eines umwandelbaren Multifunktionsmöbels in einer um 90 Grad geschwenkten Stellung der Gebrauchseinheit,

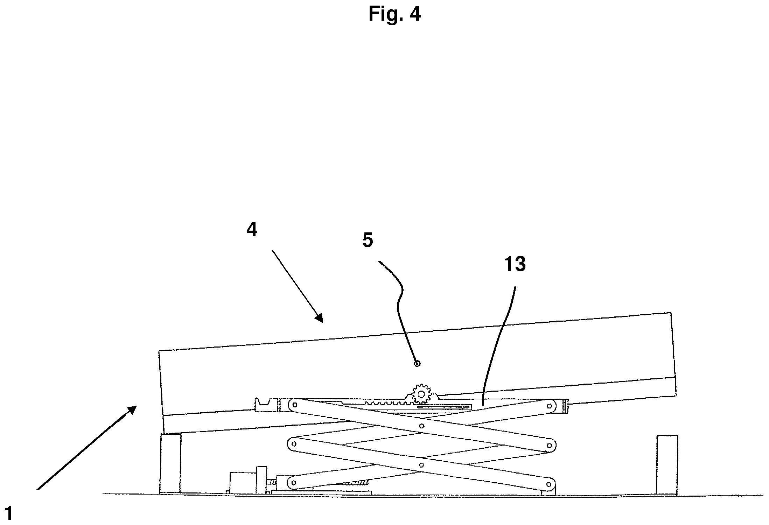

Figur 4 eine schematische Stirnansicht eines umwandelbaren Multifunktionsmöbels in einer geneigten Stellung der Gebrauchseinheit, teilweise vom Auflagerahmen losgelöst,
Figur 5 einen schematischen vertikalen Schnitt eines Drehgetriebes in einer ersten Ausführungsform,
Figur 6 einen schematischen vertikalen Schnitt eines Getriebes in einer zweiten Ausführungsform,
Figur 7 eine schematische Stirnansicht eines Drehgetriebes in derselben Ausführungsform wie in Figur 6,
Figur 8 einen vertikalen Schnitt in einer dritten Ausführungsform,

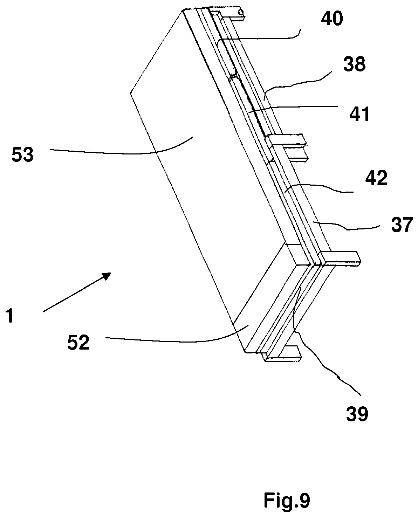

Figur 9 ein schematisches Schaubild eines zusammensetzbaren Gestells eines umwandelbaren Bettes,

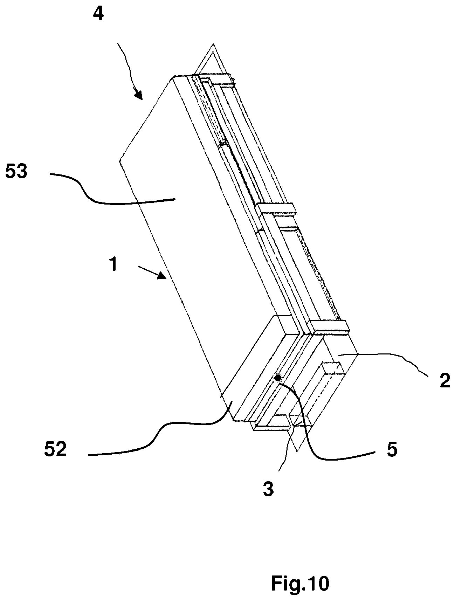

Figur 10 ein Schaubild wie Figur 9 mit Behälter-Hebemechanismus- Drehung- Neigung,

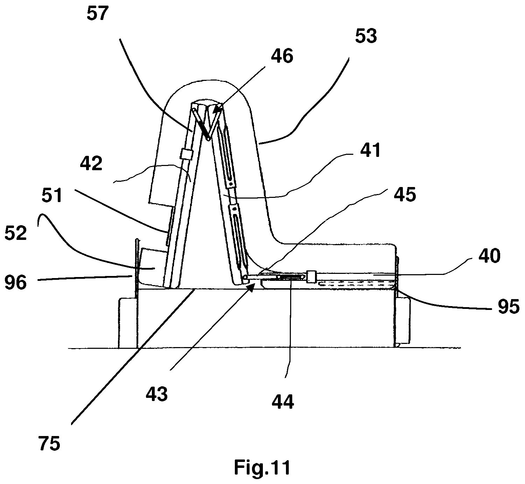

Figur 11 eine schematische Seitenansicht eines umwandelbaren Sessel, mit Laufschiene einer aus einem ersten und einen zweiten Abschnitt zusammengesetzten Matratze,

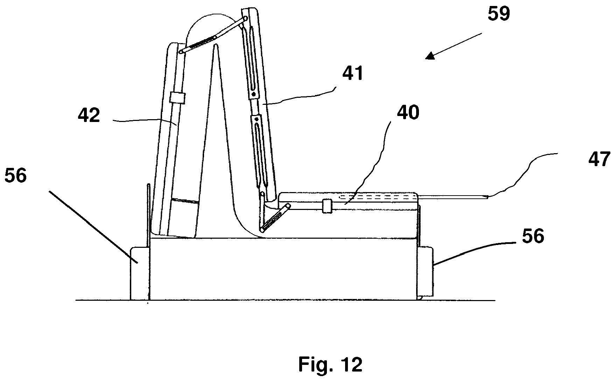

Figur 12 eine schematische Seitenansicht eines umwandelbaren Stuhls mit ausgezogener Ablage,

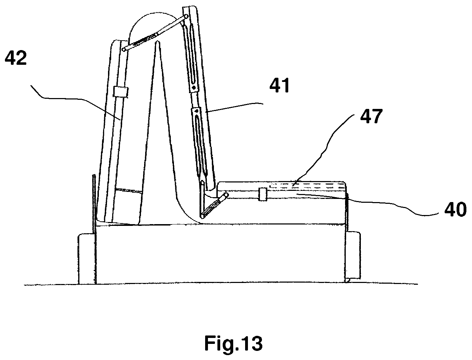

Figur 13 eine schematische Seitenansicht eines umwandelbaren Stuhls mit eingefahrener Ablage,

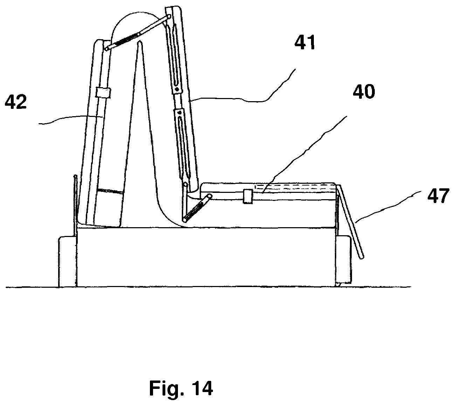

Figur 14 eine schematische Seitenansicht eines umwandelbaren Stuhls mit abgebogener Ablage,

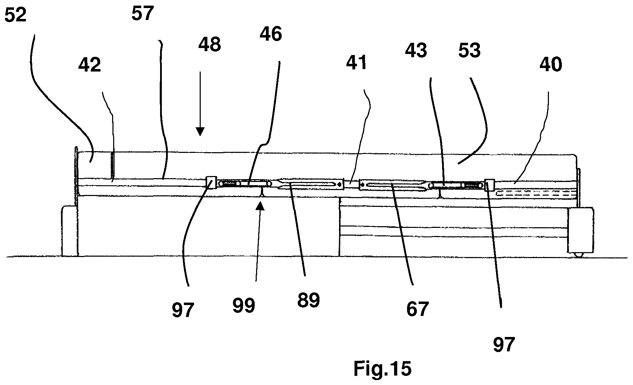

Figur 15 eine Seitenansicht eines umwandelbaren Bettes,
Figur 16 eine schematische Stirnansicht eines Hebemechanismus für ein umwandelbares Multifunktionsmöbel in einer angehobenen Stellung, in einer zweiten Ausführungsform,
Figur 17 einen schematischen vertikalen Schnitt eines Drehgetriebes bezogen auf Figur 16,
Figur 18 eine schematische Stirnansicht eines Hebemechanismus für ein umwandelbares Multifunktionsmöbel in einer angehobenen Stellung, in einer dritten Ausführungsform,
Figur 19 einen schematischen vertikalen Schnitt eines bevorzugten Drehgetriebes für den Mechanismus aus Figur 18,

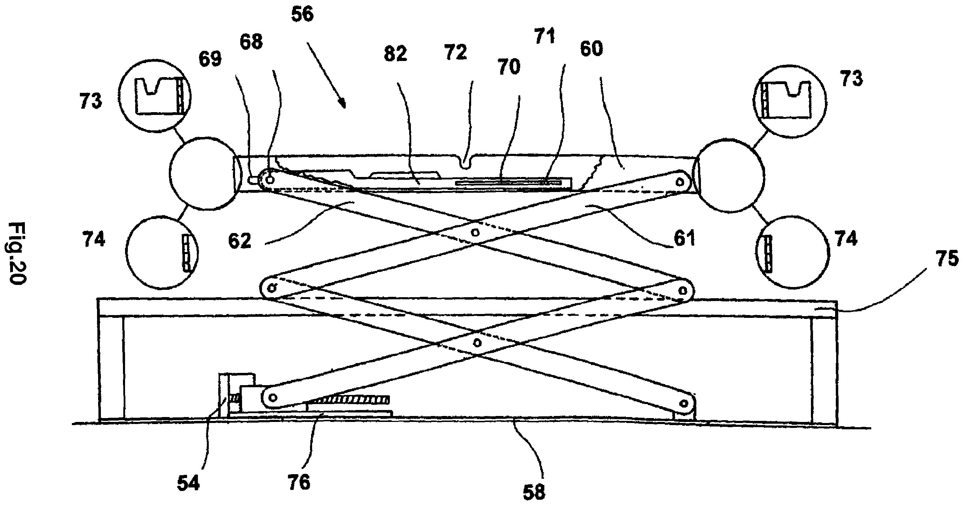

Figur 20 eine schematische Stirnansicht eines Hebemechanismus für ein umwandelbares Multifunktionsmöbel in einer angehobenen Stellung, in einer vierten Ausführungsform,

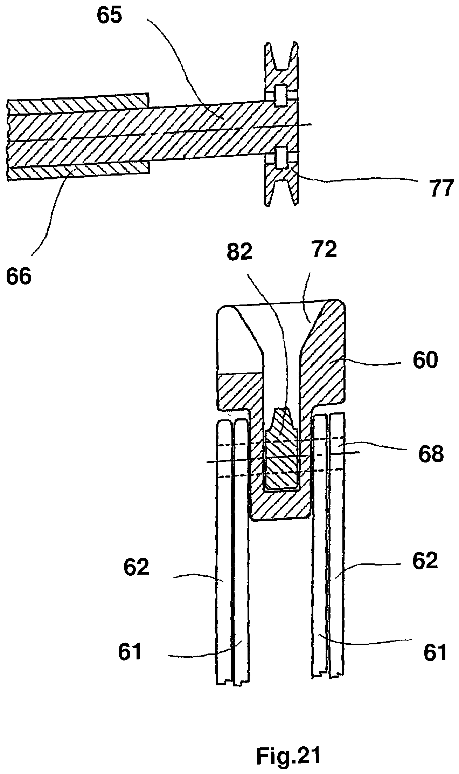

Figur 21 einen schematischen vertikalen Schnitt eines Drehgetriebes bezogen auf Figur 20,

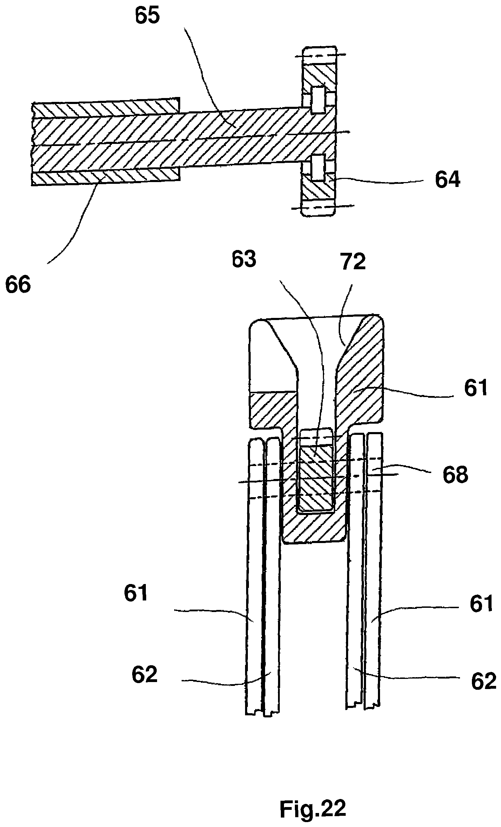

Figur 22 einen schematischen vertikalen Schnitt eines Getriebes.

In den Figuren von 1 bis 4 ist mit der Bezugsziffer 1 insgesamt schematisch ein erfindungsgemäßes umwandelbares Multifunktionsmöbel dargestellt.

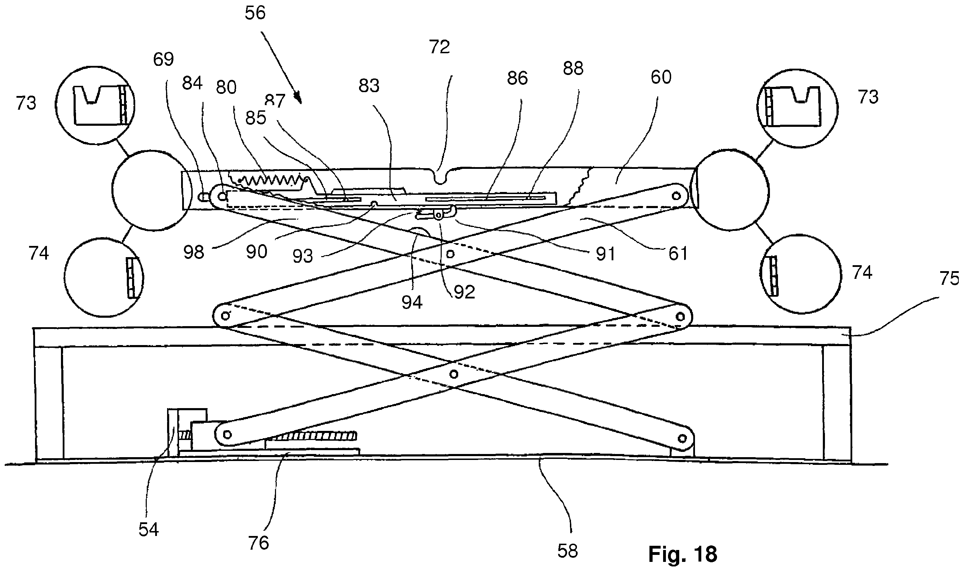

Figur 18 stellt kein Ausführungsbeispiel der vorliegenden Erfindung dar. Möbel 1 umfasst eine Stützbasis 2, einen auf der Basis 2 abgestützte Hebevorrichtung und eine Gebrauchseinheit 4, die zwei äußere Auflagestirnseiten aufweist und durch die Hebevorrichtung 3 getragen wird.

Die Gebrauchseinheit 4 kann um eine Drehachse geschwenkt werden, die sich sowohl in Längsrichtung als auch in Querrichtung zu den Stirnseiten der Gebrauchseinheit 4 befinden kann.

Die Gebrauchseinheit 4 ist mit einem Auflagebolzen 5 an jedem Ende der Drehachse versehen und ist mit der Drehvorrichtung 3 verbindbar.

Zwischen der Hebevorrichtung 3 und dem jeweiligen Auflagebolzen 5 der Drehachse ist eine Scherenmechanismus 6 angeordnet, mit mindestens einem Scherenschenkel 7, der an einem Ende mit einem Antrieb 54 der Hebevorrichtung und am anderen Ende mit einem Träger 13 verbunden ist.

Der andere Scherenschenkel 7 ist für die Steuerung mit einem Zahnelement in der Form einer Zahnstange 9 verbunden, die in einem kuppelbaren Zahnrad 10 geführt kämmt, das mit einem komplementären Element 11 des Auflagezapfens 5 drehbar ist.

In einer Ausführungsform ist das Getriebe 14 durch eine Zahnstange 9 gebildet, die durch ein Blöckchen bzw. Bolzen 55 getragen innerhalb einer am Träger 13 festliegenden Führung 12 angeordnet ist, die die beiden Enden der Scherenschenkel 7 und 8 für die Steuerung des Getriebes 14 verbindet und an der mindestens eines der Enden des Scherenschenkels 7 mit einem verschiebbaren Bolzen 15 innerhalb zur Zahnstange parallelen Nut 16 angelenkt ist, die einen Zahnabschnitt 17 aufweist, der mit dem Zahnrad 10 ausgehend von einem gegenseitigen Abstand zwischen den beiden Schenkelenden in Eingriff kommt. Das Zahnrad 10 ist am Träger 13 in einer mittigen Stellung desselben mit der zur Längserstreckung der Führung 12 quer liegenden Achse angeordnet und ist über den Getriebe 14 mit dem Auflagezapfen 5 der Gebrauchseinheit 4 verbindbar.

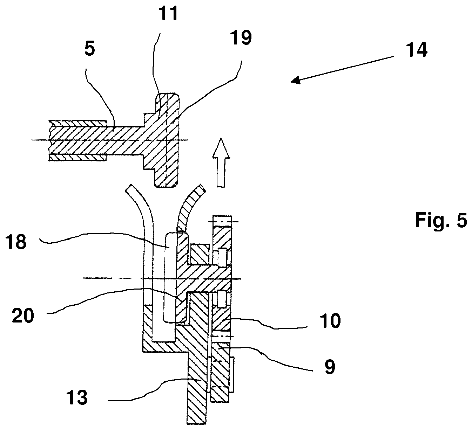

In einer weiteren in Figur 5 dargestellten Ausführungsform ist das Getriebe 14 durch eine Scheibenaussparung 19 am Auflagezapfen 5 gebildet, die mit dem Keil 18 einer Scheibe 20 gekoppelt ist, die vom Träger 13 mit einem der Achse des Zahnrad 10 mit Freilauf mit der Zahnstange 9 kämmend drehbar gelagert wird.

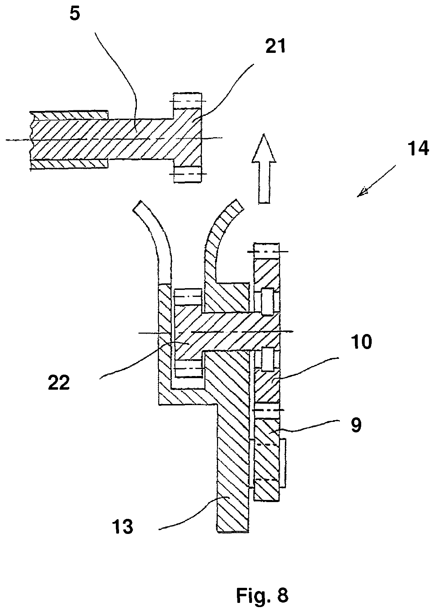

In einer noch weiteren in der Figur 8 dargestellten Ausführungsform ist das Getriebe 14 durch ein am Auflagezapfen 5 festliegendes Ritzel 21 gebildet, das mit einem Zahnrad 22 koppelbar ist, das vom Träger 13 mit der an der Achse des Zahnrades mit Freilauf 10 mit der Zahnstange 9 kämmend festliegenden Achse drehbar gelagert wird.

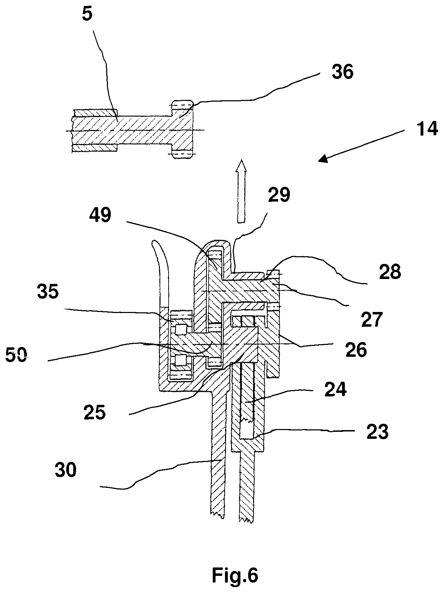

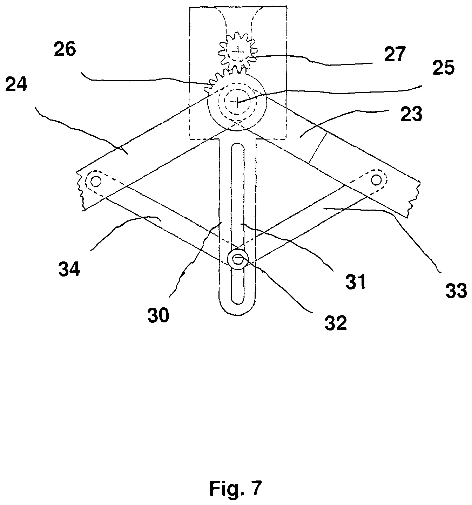

In einer anderen in Figur 6 und 7 dargestellten Ausführungsform ist das Getriebe 14 durch in einem Gelenk 25 zusammenlaufende Gelenksstangen 23 und 24 und durch einen kreisförmigen Zahnsektor 26 gebildet, der am Ende der Gelenksstange 23 festliegt und mit dem Ritzel 27 auf einer Welle 28 kämmt, den von einem Flansch 29 drehbar getragen wird, aus dem sich ein Fortsatz 30 in einer winkelhalbierenden Führung 31 erstreckt. In der winkelhalbierenden Führung ist eine Anlenkung 32 eines der Enden von zwei Armen 33 und 34 verstellbar, deren anderen Enden an den jeweiligen Stangen 23 und 24 mit Abstand von der Anlenkung 25 derselben angelenkt sind. Das Ritzel 27 überträgt die Drehbewegung über Übersetzungszahnräder 49, 50 auf ein Ritzel 35, das mit einem vom Auflagezapfen 5 der Gebrauchseinheit getragenen Zahnrad 36 in Eingriff kommt. Eines der Zahnräder ist mit einem Freilauf versehen.

In einem Ausführungsbeispiel des erfindungsgemäßen umwandelbaren Möbels besteht die Gebrauchseinheit 4 aus zwei voneinander ausziehbaren und ineinander einführbaren Gestellen 37 und 38, von denen eines durch einen Massagebrett 39 gebildet ist, das aus drei aneinander angelenkten Abschnitten 40, 41 und 42 besteht. Ein erster Abschnitt 40 ist mit einem zweiten Abschnitt 41 über einen Gelenkshebel 43 verbunden, der mit einem Teil des zweiten Abschnittes 53 der Matratze zusammenarbeitet und von dem ein Ende eines ersten Hebels 44 am ersten Abschnitt 40 angelenkt ist und das Ende des zweiten Hebels 45 am zweiten Abschnitt 41 angelenkt ist, dessen andere Ende am dritten Abschnitt 42 über einen zweiten Gelenkshebel 46 angelenkt ist, dessen Enden am zweiten und am dritten Abschnitt41, 42 des Massagebrettes angelenkt sind, die mit dem ersten Abschnitt 52 und dem zweiten Abschnitt 53 der Matratze zusammenarbeiten.

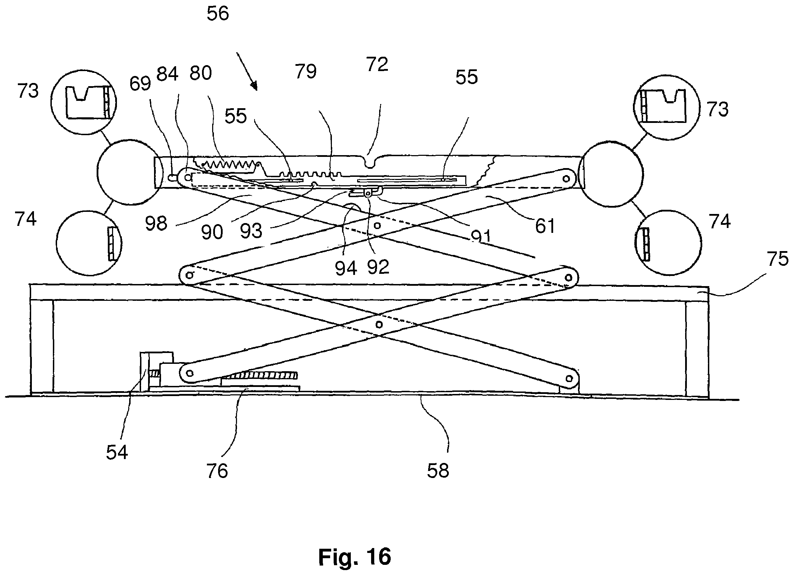

Figur 16 zeigt eine weitere Ausführungsform einer Hebevorrichtung 56. Diese umfasst eine Stützbasis 58, auf der ein Antrieb 54 festliegt. Dieser betätigt auf bekannte Art und Weise über einen längs einer linearen Führung 76 verstellbaren Schieber die Hebevorrichtung 56. In diesem Fall ist einer der Scherenschenkel 61 am freien Ende des Trägers 60 angelenkt, während das freie Ende des Scherenschenkels 98 an einem Bolzen 84 angelenkt ist, der in ei zur Aufnahme des Auflagezapfens einer im Träger 60 ausgenommenen Nut 69 verstellbar ist, um die Zahnstange 79 in Richtung des freien Endes des Scherenschenkels 61 beim Anheben der Hebevorrichtung zu schieben. Dazu weist die Zahnstange 79 zwei Nuten 85 und 86 auf, in denen Bolzen oder Blöckchen 55 eingreifen, um eine Verstellung der horizontalen Zahnstange sicherzustellen. Eine Feder 80 wird zur Folge der Verstellung der durch den Bolzen 84 verschobenen Zahnstange 79 aufgrund des Anhebens der Hebevorrichtung gespannt. Zweckmäßigerweise ist am Träger 60 ein Lager 92 eines Schwenkhebels 91 befestigt, dessen ein bolzenartiges Ende in einer entsprechenden in der Zahnstange 79 ausgenommenen Aufnahme 90 eingreift. Das andere Ende des Schwenkhebels 91 wird durch eine Feder 93 elastisch gespannt um in der genannten Aufnahme einzuschnappen. Auf das Ende des durch die Feder 93 belasteten Schwenkhebels wirkt ein selbsttätiges Freigabeelement 94 ein, um die Zahnstange 79 vom Träger 60 zu befreien, wobei sie über das Rückholen der Feder 80 in Ruhestellung in Ruhestellung zurückgebracht, indem die Hebevorrichtung 56 abgesenkt wird.

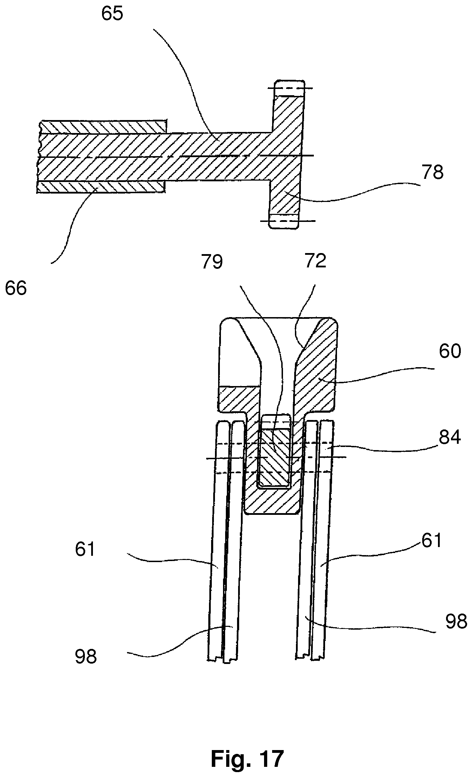

Am Ende des Trägers 60 sind jeweils nicht wirksame Tragklappen 73 und wirksame Tragklappen 74 vorgesehen. Am Träger 60 ist ein einladender Trichter 72 zur Aufnahme des Auflagezapfens 65 vorgesehen. In Figur 17 ist ein Getriebe zur Umwandlung einer linearen Bewegung der Zahnstange 79 in eine Drehbewegung dargestellt, und zwar auf ein Zahnrad 78, das am Auflagezapfen 65 (der Matratze- des Brettes, des Bettes oder ähnlichen) festliegt, der in einer Aufnahme 66 in der Gebrauchseinheit 4 über den Auflagezapfen 5 eingebracht ist, der als einem Ende das Zahnrad 78 trägt, das mit seinen Zähnen mit der Zahnstange 79 kämmt, die unter Bezugnahme auf Figur 17 unter Anstellung zwischen dem Zahnrad 78 und der durch den Trichter 72 des Trägers 60 der Hebevorrichtung 56 zentrierten Zahnstange 79 erläutert ist.

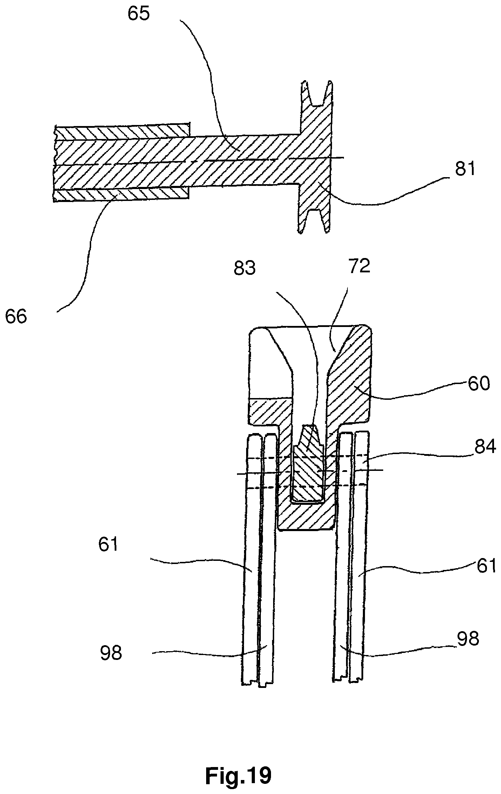

In Figur 18 ist eine nicht erfindungsgemäße Hebevorrichtung dargestellt, die sich von jener unter Bezugnahme auf Figur 16 beschriebenen dadurch unterscheidet, dass die Zahnstange durch einen Balken 83 ersetzt ist, in dem Langlöcher 85 und 86 ausgenommen sind, die auf Bolzen 87 bzw. 88 laufen. Die obere Fläche des Balkens 83 weist eine Rauheit auf bzw. ist mit einem einseitig gerichteten Reibungsmaterial überzogen, das mit einer entsprechenden Fläche eines in der Figur 19 dargestellten Reibungsrades 81 in Berührung kommt.

Die Betriebsweise des umwandelbaren Multifunktionsmöbels kann wie folgt zusammengefasst werden.

Um die Funktionen des Anhebens und der Drehung der Matratze bzw. der Matratze mit Massagebrett 57 abzuwicklen werden die Hebevorrichtungen 56 ganz einfach außerhalb bündig parallel zum Rahmen-Brett- Gitter - Lager 75 angeordnet. Über das Anheben derselben, die Ankopplung des Auflagezapfens 65, den einladenden Trichter 72 am Träger 60, wird bei Erreichen der geeigneten Höhe, die Matratze, die Matratze mit Massagebrett 57 um 180 Grad gedreht (geeignete Höhe bedeutet bis die Matratze in der Drehung nicht den Rahmen- Brett- Gitter -Lager 75 berührt).

Mindestens zwei Hebevorrichtungen 56, falls ohne Klappen 73, 74 am Träger 60 werden unterhalb dem Rahmen- Brett- Gitter - Lager 75 angeordnet, um denselben Rahmen- Brett- Gitter - Lager 75 anzuheben oder in der einen oder in der anderen Richtung zu neigen; in diesem Fall erfolgt die Funktionsweise wechselweise je nach Neigungsrichtung, die man erhalten möchte.

Um die Gebrauchseinheit 4 für das Bettenmachen anzuheben, werden bei Betätigung der aneinander gegenüberliegenden Hebevorrichtungen 56 die oberen Träger 60 den Rahmen- Brett- Gitter - Lager 75 auffangen, um in auf eine geeignete Höhe für das Bettenmachen anzuheben. Nach Beendigung des Bettenmachens kehren die Hebevorrichtungen 56 in die Ruhestellung zurück, wobei sie abgesenkt werden, und bereit für den nächsten Ablauf sind, wobei sie unterhalb der Gebrauchseinheit 4 des Rahmens-Brettes- Gitters - Lagers 75 bleiben.

Um die Neigung in der einen oder anderen Richtung zu erhalten, werden einem oder mehreren Hebevorrichtungen in entgegengesetzter Richtung wechselweise betätigt, je nachdem welche Neigung man erhalten möchte.

Im Falle, wo mindestens zwei aneinander gegenüberliegenden Hebevorrichtungen 56 außerhalb bündig mit dem Rahmen- Brett- Gitter - Lager 75 zur Abwicklung ihrer Funktion angeordnet werden, werden zweckmäßigerweise Auffangelemente 74 (73) vorgesehen, die geeignet sind, den Rahmen- Brett- Gitter - Lager 75 anzuheben und zu neigen, wobei die Matratze bzw. die Matratze mit Massagebrett 57 auf eine Höhe gebracht wird, die für die Arbeitsweise geeignet ist. Die Hebevorrichtungen werden mit mindestens jeweils zwei Klappen 73, 74 versehen (wie dies in der Zeichnung ausschnittsweise gezeigt ist), die für ihre Betriebsweise in einer anderen Ausführungsform auf dem Träger um 90 Grad gedreht angeordnet werden (Kreisausschnitt 74) um die Gebrauchseinheit 4 und daher das umwandelbare Multifunktionsmöbel 1 anzuheben und zu neigen.

Die Auflage- und Drehzapfen 5 und 65 können auf der horizontalen Achse und aneinander diametral entgegengesetzt und auch axial im Massagebrett oder in der Matratze mit Massagebrett 57 angeordnet sein.

In einer Ausführungsform ist mindestens ein aus seiner Aufnahme austretender Auflage- und Drehzapfen 5 und 65 mit einem Zahnrad 64 mit Freilauf oder Reibscheibe 77 mit Freilauf versehen.

Während des Absenkens werden die Zahnstange 63 oder den Platten mit Gleitschiene 82 bei Einfahren - Rückkehr vom Bolzen 68 in die Anfangsstellung verschoben. Der Freilauf im Zahnrad 64 und das Zahnrad- Reibscheibe 77 sind mit Freiläufen versehen, die die Rückkehr von 63 und 82 und die umgekehrte Drehung der Matratze oder der Matratze mit Massagebrett verhindern.
Die Zahnräder 64 mit Freilauf am Bolzen 65 oder 77, die aus dem Einsatz der Matratze oder Matratze mit Passagen Brett 57 heraustreten sind mindestens zwei, derart, dass bei Drehung der Matratze um 180 Grad auf der horizontale Achse, die Hebevorrichtung 56 zur Drehung- Neigung in einer anderen Ausführungsform dieselben Funktionen abwickeln kann.

In einer anderen Ausführungsform weist die Hebevorrichtung 56 einen Auflage- und Drehzapfen 65 mit einem Zahnrad 78 ohne Freilauf auf.

In einer weiteren Ausführungsform weisen die angetriebenen Elemente 78 und 81 bei Drehung keine Freiläufe auf.

Die Funktionen des Freilaufes sind nicht erforderlich, da die Zahnstange 79 oder die verstellbare Platte 83 beim Schritt des Absenkens der Hebevorrichtung 56 nicht in die anfängliche Ruhestellung zurückkehren.

Die Zahnstange 63 oder verschiebbare Platte 82 werden durch Führungslanglöcher 70 mit Bolzen 71 und vom Bolzen 68 in der Nut 69 geführt.

Ein Scherenschenkel 98 der Hebevorrichtung 56 weist in einer geeigneten Stellung ein selbsttätiges Freigabeelement 94 auf, das aufgrund der Aufweitung der Scherenschenkel 61 und 98 beim Schritt des Absenkens um sich in die Ruhestellung zurückzuziehen, wobei das selbsttätige Freigabeelement 94 mit dem Arretierbolzen 91 in Berührung kommt, die Zahnstange 79 oder verstellbare Platte 83 arretiert, wobei über die Feder 80 die Zahnstange 79 oder die Platte 83 in die anfängliche Ruhestellung gebracht wird.

Die Zahnstange 79 oder verschiebbare Platte 83, einerseits mit der Feder 80 und andererseits dem Träger 60 verbunden, werden vom Bolzen 84 während des Anhebens der Hebevorrichtung 56 (durch Zusammenziehen der Scherenschenkel 61 und 98) verschoben.

Der Scherenschenkel 98 verschiebt unter Zusammenwirkung mit dem verschiebbaren Bolzen 84 in der Nut 69 die Zahnstange 79 oder Platte 83 bis der am Lager 92 drehbar abgestützte Hebel mit dem Arretierbolzen 91 mit der Feder 93 in der Aufnahme 90 in Eingriff kommt. Sobald die Matratze oder Matratze mit Massagebrett 57 nach der Drehung um 180 Grad während des Abstiegs am Rahmen- Brett- Gitter - Lager 75 aufliegt, wird das mit dem Träger 60 der Hebevorrichtung 56 verbundene Getriebe vom Auflage- und Drehbolzen 65 getrennt, und die Zahnstange 63 oder verschiebbare Platte 82 und 83 kehren in ihre Anfangsstellung bereit für den nächsten Betriebsablauf zurück.

Zufolge der auf das Zusammenziehen der Scherenschenkel 61 und 62 zurückzuführende Verschiebung der Zahnstange 63 oder Platte 82, kommen über die Verschiebung des Bolzens 68 in der Nut 69 des Trägers 60 unter Mitwirkung mit demselben Scherenschenkel 62 oder Zahnstange 63 bzw. verschiebbaren Platte 82, nach Erreichen der für die Drehung geeigneten Höhe, die Zahnstange 63 und die Platte 82 jeweils mit dem Zahnrad 64 oder dem Rad- Reibscheibe 77 oder mit einem ein Reibmaterial auf der Berührungsseite mit der Platte 82 aufweisenden Rad in Berührung, wobei unter Vorschub der Zahnstange 63 oder Platte 82 eine Drehung von 180 Grad der Matratze oder Matratze mit Massagebrett 57 hervorgerufen wird. Ist die Drehung beendet, wird die Hebevorrichtung 56 abgesenkt, um in die Ruhestellung zurückzukehren, wobei sie sich vom Bolzen 65 Augenblick trennt, wo die Matratze oder Matratze mit Massagebrett 57 auf dem Rahmen- Brett- Gitter - Lager 75 zum Liegen kommt.

## Patentansprüche

1. Umwandelbares Multifunktionsmöbel (1), umfassend
• mindestens eine Stützbasis (2, 58),
• mindestens eine auf der Stützbasis (2, 58) abgestützte Hebevorrichtung (3, 56),
• eine Gebrauchseinheit (4), die zwei äußere Auflagestirnseiten aufweist, die von einem Rahmen-Brett- Gitter - Lager (75) gehalten werden,
• eine horizontale Drehachse in Längs- oder Querrichtung, um welche herum die Gebrauchseinheit (4) gedreht werden kann,
• einen Auflagezapfen (5, 65) an jedem Ende der Drehachse, der mit den Hebevorrichtungen (3, 56) verbindbar ist,
**dadurch gekennzeichnet, dass**
• mindestens ein Scherenmechanismus (6) zwischen den Hebevorrichtungen (3, 56) und den jeweiligen Auflagezapfen (5, 65) der Drehachse angeordnet ist,
• mindestens ein Scherenschenkel (7, 8, 61, 62, 98) an einem Ende mit einem Antrieb (54), wie einem hydraulischen, pneumatischen, mechanischen, elektrischen oder elektromagnetischen Zylinder der Hebevorrichtung (3, 56) und am anderen Ende mit einem Träger (13, 60) verbunden ist,
• wobei das andere Ende des Scherenschenkels für die Steuerung mit einem linearen Element verbunden ist, das einen Oberfläche aufweist, die mit einer Oberfläche eines Rades koppelbar ist, das mit einem komplementären Element (11, 36, 21, 81, 77) des Auflagebolzens (5, 65) drehbar gekoppelt ist., und dass das lineare Element ein kämmendes Zahnelement (9, 79, 63) ist und das Rad ein Zahnrad (10, 78, 64) ist, das mit dem komplementären Element (11, 56, 21, 81, 77) des Auflagebolzens (5, 65) drehbar kuppelbar ist.

2. Multifunktionsmöbel nach Anspruch 1, **dadurch gekennzeichnet, dass** das Zahnelement eine Zahnstange (9, 63, 79) ist, die innerhalb eines Führungslangloches (12, 70, 85, 86) am Träger (13, 60) angeordnet ist, der die beiden Enden der Scherenschenkel (7,8, 61, 98) für die Steuerung eines Getriebes (14) und an dem mindestens eines der Enden des Scherenschenkels mit einem verschiebbaren Bolzen (15, 68) innerhalb einer Nut (16, 69) parallel zur Zahnstange (9, 63, 79) angelenkt ist, die einen Zahnabschnitt (17) aufweist, der mit dem Zahnrad (10, 64, 78) ausgehend von einem gegenseitigen Abstand zwischen den Enden der der Scherenschenkel (7, 8, 61, 62, 98) in Eingriff kommt, wobei das Zahnrad (10, 64, 78) am Träger (13, 60) in einer mittigen Stellung desselben mit der Achse quer zur Längserstreckung des Führungslangloches (12, 70, 85, 86) drehbar angeordnet und über das Getriebe (14) mit dem Auflagezapfen (5, 65) der Gebrauchseinheit (4) verbindbar ist.

3. Multifunktionsmöbel nach Anspruch 1, **dadurch gekennzeichnet, dass** das Getriebe durch eine Scheibenaussparung (19) am Auflagezapfen (5) gebildet ist, die mit einem Keil (18) einer Scheibe (20) gekoppelt werden kann, die vom Träger (13) mit einer zur Achse des Zahnrades mit Freilauf (10) festliegenden Achse drehbar gelagert wird, das mit der Zahnstange (9) kämmt.

4. Multifunktionsmöbel nach Anspruch 1, **dadurch gekennzeichnet, dass** das Getriebe (14) durch ein am Auflagebolzen festliegendes Ritzel (21) gebildet ist, das mit einem Zahnrad (22) koppelbar ist, das vom Träger (13) mit der an der Achse des Zahnrades mit Freilauf (10) festliegenden Achse mit der Zahnstange (9) kämmend drehbar gelagert ist.

5. Multifunktionsmöbel nach Anspruch 1, **dadurch gekennzeichnet, dass** das Getriebe (14) durch Stangen (23, 24), die jeweils an einem der Steuerenden der Stangen (23, 24) angelenkt sind und zueinander in einer Anlenkung (25) zusammenlaufen, und durch einen kreisförmigen Zahnsektor (26) gebildet wird, der an einem der Enden der Stange (23) festliegt und mit einem Ritzel (27) auf einer Welle (28) kämmt, die von einem Flansch (29) drehbar getragen wird, von dem sich ein Fortsatz (30) in einer winkelhalbierenden Führung (31) erstreckt, in der eine Anlenkung (32) eines der Enden von zwei Armen (33, 34) verstellbar ist, deren anderen Enden an den jeweiligen Stangen (23, 24) mit Abstand von der Anlenkung (25) in derselben angelenkt sind, wobei das Ritzel (27) über Übersetzungszahnräder (49, 50) die Bewegung dem Ritzel (35) mit Freilauf überträgt, das mit dem vom Auflagezapfen (5) der Gebrauchseinheit (4) getragenen Zahnrad (36) in Eingriff gebracht wird.

6. Multifunktionsmöbel nach Anspruch 1, **gekennzeichnet durch** mindestens eine Hebevorrichtung (56) mit einer Stützbasis (58) an der ein Antrieb (54) festliegt, der auf bekannte Art und Weise über einen längs einer linearen Führung (76) verschiebbaren Schieber die Hebevorrichtung (56) betätigt, die über Scherenschenkel (61) am freien Ende des Trägers (13, 60) angelenkt ist, während das freie Ende des Scherenschenkels (62) an einem Bolzen (68) angelenkt ist, der in einer aus dem Träger (60) ausgearbeiteten Nut verschiebbar ist, um die Zahnstange (79) in Richtung des freien Endes des Scherenschenkels (61) beim Anheben der Hebevorrichtung zu verschieben, wobei die Zahnstange (79) mindestens eine Nut aufweist, in der am Träger (60) festliegende Zapfen oder Blöckchen (55) in Langlöchern (85, 86) eingreifen, um eine Verschiebung der horizontalen Zahnstange zu gewährleisten.

7. Multifunktionsmöbel nach den vorstehenden Ansprüchen, **dadurch gekennzeichnet, dass** für ein Getriebe zur Umwandlung der linearen Bewegung der Zahnstange (17) in eine Drehbewegung, in der Gebrauchseinheit (Matratze- Brett, Bett oder Ähnliches) eine Aufnahme (66) ausgearbeitet ist, in der ein an der Gebrauchseinheit (Matratze- Brett, Bett oder Ähnliches) festliegender Auflagebolzen aufgenommen ist, der an seinem freien Ende das Zahnrad (78) trägt, das mit seinen Zähnen mit der Zahnstange (79) unter Annäherung zwischen dem Zahnrad (78) und der an einem einladenden Trichter (72) des Trägers (60) der Hebevorrichtung zentrierten Zahnstange (79) kämmt.

8. Multifunktionsmöbel nach Anspruch 1, **dadurch gekennzeichnet dass** das lineare Element ein Balken (83) mit Langlöchern (85 und 86) ist, die auf Bolzen (87 bzw. 88) laufen, wobei die obere Fläche des Balkens (83) eine Rauheit aufweist bzw. mit einem einseitig gerichteten Reibungsmaterial überzogen ist, das mit einer entsprechenden Fläche eines entsprechenden Reibungsrades (81) in Berührung kommt.

9. Multifunktionsmöbel nach den vorstehenden Ansprüchen, **dadurch gekennzeichnet, dass** die Gebrauchseinheit auf einer Basis angeordnet ist, die aus zwei Gestellen (37, 38) besteht, die voneinander bzw. ineinander von einer Sitzstellung in eine Liegestellung und umgekehrt auseinanderziehbar bzw. einführbar sind, wobei die Gebrauchseinheit aus einem Brett (39) mit drei aneinander angelenkten Abschnitten (40, 41, 42) besteht, von denen ein erster mit einem Teil des zweiten Abschnittes (53) der Matratze zusammenarbeitender Abschnitt (40), mit einem zweiten Abschnitt (41) über einen mit einem Teil des zweiten Abschnittes (53) der Matratze zusammenarbeitenden ersten Gelenkshebel (43) verbunden ist, und von dem ein Ende eines ersten Hebels (44) am ersten Abschnitt (40) angelenkt ist und das Ende des zweiten Hebels (45) an einem der Enden des zweiten Abschnitt (41) angelenkt ist, dessen andere Ende am dritten Abschnitt (42) über einen zweiten Gelenkshebel (46) angelenkt ist, dessen Enden an mit ersten Abschnitt (52) und dem zweiten Abschnitt (53) der Matratze am zweiten und am dritten Abschnitt (41, 42) des Massagebrettes angelenkt sind, die mit dem ersten Abschnitt 52 und dem zweiten Abschnitt 53 der Matratze zusammenarbeiten.

10. Multifunktionsmöbel nach den vorstehenden Ansprüchen, **dadurch gekennzeichnet dass** den Gebrauchseinheit (4) eine mit dem dritten Abschnitt (42) des Massagebrettes zusammenwirkenden Führung (51) aufweist, die den zweiten Abschnitt (53) der Matratze in der Umwandlung von Sessel auf Bett und vom Bett auf Sessel und von Massagebrett (57) auf Stuhl verschiebt.

11. Multifunktionsmöbel nach den vorstehenden Ansprüchen, **dadurch gekennzeichnet, dass** Feststellvorrichtungen (95 und 96) der Gebrauchseinheit als Arretierung beim Einzug von Bettebene zum Sessel und von Massagebrett zum Stuhl dienen.

12. Multifunktionsmöbel nach den vorstehenden Ansprüchen, **dadurch gekennzeichnet, dass** die Arretier-Freigabeelemente (67 und 89), die im Bolzen des Hebels (43, 46) eingebracht sind, die Gebrauchseinheit (4) während des Anhebens und der Drehung um 180 Grad derselben arretieren, wobei die Umbiegung der Matratze mit Massagebrett (57) vermieden wird.

13. Multifunktionsmöbel nach den vorstehenden Ansprüchen, **dadurch gekennzeichnet, dass** die Hebevorrichtungen, Dreh- und Neigungsvorrichtungen (56) mindestens zwei sind und für die Umwandlung von der Sitzposition durch Anhebung, Neigung auch von Diwanen und Kindersitzen verwendet werden können.

14. Multifunktionsmöbel nach den vorstehenden Ansprüchen, **dadurch gekennzeichnet, dass** für die Umwandlung einer horizontalen Ebene der Gebrauchseinheit in mindestens eine geneigte Ebene eine ausziehbare anhebbare Vorrichtung vorgesehen ist.

15. Multifunktionsmöbel nach den vorstehenden Ansprüchen, **dadurch gekennzeichnet, dass** die Feder (80) die Zahnstange (79) zurückholt und die verschiebbarer Platte (83) eine Rückholfeder aufweist.

16. Multifunktionsmöbel nach den vorstehenden Ansprüchen, **dadurch gekennzeichnet dass** die Feder (93) den drehbaren Hebel mit Arretierbolzen (91) in Position hält.

## Claims

1. A multipurpose convertible furniture item (1), comprising
• a bearing base (2, 58),
• at least one lifting device (3, 56) supported on the base (2, 58),
• a unit of use (4) having two outer bearing faces and supported by the frame-base-table-support (75),
• an axis of rotation which is horizontal in the longitudinal or transverse direction, about which the unit of use (4) may be rotated,
• a bearing pivot pin (5, 65) at each end of the axis of rotation, which is adapted to be connected with the lifting devices (3, 56),
**characterized in that**
• at least one scissors mechanism (6) is placed between the lifting devices (3, 56) and the respective pivot pins (5, 65) of the axis of rotation,
• at least one branch (7, 8, 61, 62, 98) of the scissors is connected at one end with an actuator (54) such as a hydraulic, pneumatic, mechanical, electric or electromagnetic cylinder of the lifting device (3, 56) and at the other end with a beam (13, 60),
the other end of the branch of the scissors being controllingly connected with a linear element having a surface that is adapted to be coupled to a surface of a wheel that is adapted to be rotatably coupled to a complementary element (11, 36, 21, 81, 77) of the pivot pin (5, 65), and that the linear element is a meshing toothed element (9, 79, 63) and the wheel is a gear wheel (10, 78, 64), that is adapted to be rotatably coupled to a complementary element (11, 36, 21, 81, 77) of the pivot pin (5, 65).

2. A multipurpose furniture item as claimed in claim 1, **characterized in that** the toothed element is a rack (9, 63, 79) located within a guiding slot (12, 70, 85, 86) of the beam (13, 60) which connects the two ends of the scissors' branches (7, 8, 61, 62, 98) for controlling a kinematic arrangement (14) and has at least one of the ends of the scissors' branch hinged thereto by means of a pin (15, 68) sliding in a groove (16, 69) parallel to the rack (9, 63, 79), which has a toothed section (17) adapted to engage with the gear wheel (10, 64, 78) starting from a mutual distance between the two ends of the branch (7, 8, 61, 62, 98), which gear wheel (10, 64, 78) is rotatably placed on the beam (13, 60) in a central position thereof, with its axis transverse to the longitudinal extent of the guiding slot (12, 70, 85, 86) and is adapted to be connected with the pin (5, 65) of the unit of use (4) by means of the kinematic arrangement (14).

3. A multipurpose furniture item as claimed in claim 1, **characterized in that** the kinematic arrangement is composed of a disk keyway (19) on the pin (5), which is adapted to be coupled with the key (18) of a disk (20) that is rotatably supported by the beam (13) with its axis joined to the axis of the gear wheel with an idle wheel (10) meshing with the rack (9).

4. A multipurpose furniture item as claimed in claim 2, **characterized in that** the kinematic arrangement (14) is composed of a pinion (21) adapted to be coupled with a gear wheel (22) that is rotatably supported by the beam (13) with its axis joined to the axis of the gear wheel whose idle wheel (10) meshes with the rack (9).

5. A multipurpose furniture item as claimed in claim 1, **characterized in that** the kinematic arrangement (14) is composed of a bar linkage (23, 24) with bars hinged to one of the ends controlling said bars (23, 24) and converging into one joint (25), and of a toothed circular sector (26) rigidly joined to one of the ends of the beam (23) and meshing with a pinion (27) on a shaft (28) rotatably carried by a flange (29) having an extension (30) with a bisecting line (31) in which a joint (32) of one of the ends of two arms (33, 34) slides, the other ends being hinged to the respective bars (23, 24) at a distance from their joint (25), the pinion (27) transferring motion, through the multiplying gears (49, 50), to the pinion (35) with an idle wheel adapted to engage with the gear (36) carried by the pin (5) of the unit of use (4).

6. A multipurpose furniture item as claimed in claim 2, **characterized by** at least one lifting device (56), a bearing base (58) which is integral with an actuator (54), which operates in a known manner by means of a slider that slides along a linear guide (76). The lifting device (56) being hinged via branches (61) to the free end of the beam (13, 60), whereas the free end of the branch (62) is hinged around a pin (68) that slides in a groove formed in the beam (60) to push the rack (79) toward the free end of the branch (61) as the lifting device is being raised. The rack (79) has at least one groove, with pins or blocks (55) engaging in slots (85, 86) to ensure displacement of the horizontal rack.

7. A multipurpose furniture item as claimed in the preceding claims, **characterized in that** a kinematic arrangement for converting the linear motion of the rack (17) to a rotary motion is obtained by forming a receptacle (66) in the bearing member (mattress-table, bed or the like) for receiving a bearing pivot pin joined to the bearing member (mattress-table, bed or the like), which carries at its free end the gear wheel (78), which is adapted to mesh by its teeth with the rack (79) with the gear wheel (78) moving toward the rack (79) at the center on the lead-in funnel (72) of the beam (60) of the lifting device.

8. A multipurpose furniture item as claimed in claim 1, **characterized in that** the linear element is a bar (83) with slots (85 and 86), sliding on pivots (87 and 88 respectively), the upper surface of the bar (83) being textured or coated with a friction material designed to contact a corresponding surface of a friction wheel (81).

9. A multipurpose furniture item as claimed in the preceding claims, **characterized in that** the unit of use is placed on a base consisting of two frameworks (37, 38) that can be fitted into and pulled out of each other, from a seating position to a lying position and vice versa, and is formed by a table (39) composed of three mutually articulated sections (40, 41, 42), one (40) of which cooperates with part of the second section (53) of the mattress, is connected with a second section (41) via a first toggle joint lever (43), cooperating with part of the second section (53) of the mattress, one end of a first lever (44) whereof being articulated to the first section 40 and the end of the second lever (45) being articulated to the second section (41), whose other end is articulated to the third section (42) via a second toggle joint lever (46) whose ends are hinged to the second and third sections (41, 42), cooperating with the first section (52) and the second section (53) of the mattress.

10. A multipurpose furniture item as claimed in the preceding claims, **characterized in that** the unit of use (4) has a guide (51) cooperating with the third section (42) of the massage table which is adapted to cause the second section (53) of the mattress to slide into a state for conversion from an armchair to a bed and from a bed to an armchair and from a massage table (57) to a chair.

11. A multipurpose furniture item as claimed in the preceding claims, **characterized in that** the clamps (95) and (96) of the unit of use serve as a lock against back conversion from a bed table to an armchair and from a message table to a chair.

12. A multipurpose furniture item as claimed in the preceding claims, **characterized in that** the sliding locking/unlocking members (67) and (89) inserted in the lever pin (43), (46) lock the unit of use (4) as the latter is raised and rotated through 180°, thereby preventing the mattress with massage table (57) from being collapsed.

13. A multipurpose furniture item as claimed in the preceding claims, **characterized in that** the lifting, rotating and tilting devices (56) are at least two in number and may be used for conversion from seating to raising and tilting even of sofas and high chairs for children.

14. A multipurpose furniture item as claimed in the preceding claims, **characterized in that** a pull-out lifting device is provided for conversion of a horizontal surface composed of coupled elements in a tilted plane (99).

15. A multipurpose furniture item as claimed in the preceding claims, **characterized in that** the spring (80) returns the rack (79) and the sliding plate (83) has a return spring therefor,

16. A multipurpose furniture item as claimed in the preceding claims, **characterized in that** the spring (93) holds the pivoting lever with the locking pin (91).

## Revendications

1. Meuble transformable multifonction (1) comprenant
• une base de soutien (2, 58),
• au moins un dispositif de levage (3, 56) soutenu sur la base (2, 58),
• une unité d'emploi (4) ayant deux faces d'appui extérieures et soutenue par le châssis-base-table-support (75),
• un axe de rotation, horizontal dans les directions longitudinale ou transversale, autour duquel l'unité d'utilisation (4) peut être tournée,
• un pivot d'appui (5, 65) à chaque extrémité de l'axe de rotation, pouvant être relié aux dispositifs de levage (3, 56),
**caractérisé en ce que**
• au moins un mécanisme à ciseaux (6) est situé entre les dispositifs de levage (3, 56) et les pivots respectifs (5, 65) de l'axe de rotation,
• au moins une branche (7, 8, 61, 62, 98) des ciseaux est reliée à une extrémité à un actionneur (54) tel un cylindre hydraulique, pneumatique, mécanique, électrique ou électromagnétique du dispositif de levage (3, 56) et à l'autre extrémité à une poutre (13, 60),
l'autre extrémité de la branche de la paire de ciseaux étant reliée à un élément linéaire de façon à le commander, ledit élément étant conçu pour s'accoupler à une surface d'une roue conçue pour d'accoupler de manière rotative à un élément complémentaire (11, 36, 21, 81, 77) du pivot (5, 65), et que l'élément linéaire est un élément d'engrènement à dents (9, 79, 63) et la roue est une roue dentée (10, 78, 64), conçue pour s'accoupler à un élément complémentaire (11, 36, 21, 81, 77) du pivot (5, 65).

2. Meuble multifonction selon la revendication 1, **caractérisé en ce que** l'élément à dents est une crémaillère (9, 63, 79) située à l'intérieur d'une fente de guidage (12, 70, 85, 86) de la poutre (13, 60) reliant les deux extrémités des branches de ciseaux (7, 8, 61, 62, 98) pour commander un cinématisme (14) et à laquelle est articulée au moins l'une des extrémités de la branche de ciseaux au moyen d'un pivot (15, 68), coulissant dans une rainure (16, 69) parallèle à la crémaillère (9, 63, 79), qui a une section crantée (17) apte à s'engager avec la roue dentée (10, 64, 78) à partir d'une distance entre les deux extrémités de la branche (7, 8, 61, 62, 98), ladite roue dentée (10, 64, 78) étant placée de manière rotative sur la poutre (13, 60) dans une position centrale de celle-ci, avec son axe transversal à l'étendue longitudinale de la fente de guidage (12, 70, 85, 86) et étant conçue pour se raccorder avec le pivot (5, 65) de l'unité d'emploi (4) au moyen du cinématisme (14).

3. Meuble multifonction selon la revendication 1, **caractérisé en ce que** ledit cinématisme est composé d'une rainure de disque (19) sur le pivot (5), qui est conçue pour s'accoupler avec la clavette (18) d'un disque (20) supporté de manière rotative par la poutre (13) avec son axe joint à l'axe de la roue dentée avec une roue folle (10) s'engrenant avec la crémaillère (9).

4. Meuble multifonction selon la revendication 2, **caractérisé en ce que** ledit cinématisme (14) est composé d'un pignon (21) conçu pour s'accoupler avec une roue dentée (22) supportée de manière rotative par la poutre (13) avec son axe joint à l'axe de la roue dentée dont la roue folle (10) s'engrène avec la crémaillère (9).

5. Meuble multifonction selon la revendication 1, **caractérisé en ce que** ledit cinématisme (14) est composé d'une mécanisme à barres (23, 24) dont les barres sont articulées à l'une des extrémités de commande desdites barres (23, 24) et convergent dans un joint (25), et d'un secteur circulaire cranté (26) solidaire de l'une des extrémités de la poutre (23) et s'engrenant avec un pignon (27) sur un arbre (28) porté de manière rotative par un flasque (29) ayant une prolongation (30) s'étendant dans un guide bissecteur (31) dans lequel glisse un joint (32) de l'une des extrémités des deux bras (33, 34), les autres extrémités étant articulées aux barres respectives (23, 24) à une distance de leur joint (25), le pignon (27) transférant le mouvement, par l'intermédiaire des engrenages multiplicateurs (49, 50), au pignon (35) avec une roue folle conçue pour s'engager avec l'engrenage (36) porté par le pivot (5) de l'unité d'emploi (4).

6. Meuble multifonction selon la revendication 2, **caractérisé par** au moins un dispositif de levage (56), une base de soutien (58) solidaire d'un actionneur (54), opérant de manière connue au moyen d'un curseur glissant le long d'un guide linéaire (76). Le dispositif de levage (56) étant articulé par les branches (61) à l'extrémité libre de la poutre (13, 60), alors que l'extrémité libre de la branche (62) est articulée autour d'un pivot (68) glissant dans une rainure formée dans la poutre (60) pour pousser la crémaillère (79) vers l'extrémité libre de la branche (61) lors de l'action de levage du dispositif de levage. La crémaillère (79) comporte au moins une rainure, dans laquelle des broches ou des blocs (55) s'engagent dans des fentes (85, 86) pour assurer le déplacement de la crémaillère horizontale.

7. Meuble multifonction selon les revendications précédentes, **caractérisé en ce qu'**un cinématisme pour convertir le mouvement linéaire de la crémaillère (17) en mouvement rotatif est obtenu en formant un logement (66) dans l'élément porteur (table porte-matelas, lit ou similaires) pour recevoir un pivot d'appui uni à l'élément porteur (table porte-matelas, lit ou similaires), portant à son extrémité libre la roue dentée (78), qui est conçue pour s'engrener par ses dents avec la crémaillère (79) avec la roue dentée (78) s'approchant de la crémaillère (79) au centre sur l'entonnoir d'entrée (72) de a poutre (60) du dispositif de levage.

8. Meuble multifonction selon la revendication 1, **caractérisé en ce que** l'élément linéaire est une barre (83) avec les fentes (85 et 86), glissant sur des pivots (respectivement 87 et 88), la surface supérieure de la barre (83) étant texturé ou couché avec un matériau de friction conçu pour entrer en contact avec une surface correspondante d'une roue de friction (81).

9. Meuble multifonction selon les revendications précédentes, **caractérisé en ce que** ladite unité d'emploi est placée sur une base composée de deux bâtis (37, 38) pouvant s'insérer et se retirer l'un dans/de l'autre de la position assise à la position couchée et vice-versa, et est formé par une table (39) composée de trois sections articulées (40, 41, 42), l'une (40) desquelles coopère avec une partie de la deuxième section (53) du matelas, est reliée à un deuxième section (41) par le biais d'un premier levier à genouillère (43), coopérant avec une partie de la deuxième section (53) du matelas, dont une extrémité d'un premier levier (44) est articulée à la première section (40) et l'extrémité du deuxième levier (45) est articulé à la deuxième section (41), dont l'autre extrémité est articulé à la troisième section (42) par le biais d'un deuxième levier à genouillère (46) dont les extrémités sont articulés à la deuxième et à la troisième section (41, 42), coopérant avec la première section (52) et la deuxième section (53) du matelas.

10. Meuble multifonction selon les revendications précédentes, **caractérisé en ce que** ladite unité d'emploi (4) possède un guide (51) coopérant avec la troisième section (42) de la table de massage et conçue pour faire glisser la deuxième section (53) du matelas dans un état de conversion d'un fauteuil à un lit et d'un lit à un fauteuil et d'une table de massage (57) à une chaise.

11. Meuble multifonction selon les revendications précédentes, **caractérisé en ce que** les arrêts (95) et (96) de l'unité d'emploi font fonction de verrou pour empêcher la reconversion d'une table de lit à un fauteuil et d'une table de messages à une chaise.

12. Meuble multifonction selon les revendications précédentes, **caractérisé en ce que** les éléments glissants de verrouillage/déverrouillage (67) et (89) insérés dans le pivot de levier (43), (46) verrouillent l'unité d'emploi (4) dès qu'elle est soulevée et pivotée sur 180°, empêchant ainsi que le matelas avec la table de massage (57) se replie.

13. Meuble multifonction selon les revendications précédentes, **caractérisé en ce que** les dispositifs de levage, rotation et inclinaison (56) sont au moins au nombre de deux et peuvent être utilisés également pour la conversion de la position assise à la position levée et inclinée de canapés et de chaises hautes pour enfants.

14. Meuble multifonction selon les revendications précédentes, **caractérisé en ce qu'**un dispositif de levage extractible est envisagé pour la conversion d'une surface horizontale composée d'éléments accouplés dans un plan incliné (99).

15. Meuble multifonction selon les revendications précédentes, **caractérisé en ce que** le ressort (80) rappelle la crémaillère (79) et la plaque coulissante (83) possède un ressort de rappel pour celle-ci.

16. Meuble multifonction selon les revendications précédentes, **caractérisé en ce que** le ressort (93) maintient le levier pivotant avec le pivot de verrouillage (91).
